# FASCICULE DE BREVET EUROPEEN

(11) **EP 3 310 527 B1**
(45) Date de publication et mention de la délivrance du brevet: **07.08.2019**
(21) Numéro de dépôt: 16707189.3
(22) Date de dépôt: 10.02.2016
(51) Int. Cl.: B23K 35/30, B22D 11/00, B23K 35/40, B23K 35/02, C22C 9/00

(54) **ELECTRODE DE SOUDAGE ET PROCEDE DE FABRICATION D'UNE ELECTRODE DE SOUDAGE**
SCHWEISSELEKTRODE UND VERFAHREN ZUR HERSTELLUNG EINER SCHWEISSELEKTRODE
WELDING ELECTRODE AND METHOD OF MANUFACTURING A WELDING ELECTRODE

(30) Priorité: 16.06.2015 FR 1555474; 01.10.2015 WO PCT/FR2015/052625
(43) Date de publication de la demande: 25.04.2018
(73) Titulaire: Lebronze Alloys, 51600 Suippes (FR)
(72) Inventeur: FRANCOIS, Nicolas, 51360 Prunay (FR); SOREAU, Thierry, 51520 Sarry (FR); PRIMAUX, François, 51110 Isles sur Suippe (FR)
(74) Mandataire: Cabinet Bleger-Rhein-Poupon
(86) Numéro de dépôt international: PCT/FR2016/050297
(87) Numéro de publication internationale: WO 2016/203122

(56) Documents cités:
- EP-A2- 1 650 318
- FR-A- 1 313 451
- FR-A1- 2 520 757
- FR-A1- 2 771 038
- FR-A1- 2 855 438

## Description

La présente invention concerne le domaine des électrodes de soudage.

L'invention est plus particulièrement relative à des électrodes de soudage par résistance en cuivre. De telles électrodes sont utilisées, par exemple, pour le soudage par résistance par points, pour l'assemblage de tôles entre elles.

Ces tôles, une fois soudées et assemblées, présentent une application notamment dans le domaine de l'industrie automobile.

Le soudage de deux tôles est réalisé par la combinaison d'une forte intensité électrique et d'une pression ponctuelle, également appelée « effort de serrage ».

Plus particulièrement, dans un premier temps, on augmente l'effort de serrage entre lesdites deux tôles à assembler. Ensuite, au cours d'une deuxième phase, et une fois les deux tôles serrées, on fait passer du courant entre deux électrodes qui sont disposées de part et d'autre desdites tôles.

Le passage du courant entre les deux électrodes entraine une augmentation de la température au niveau de la zone concernée des tôles,jusqu'au point de fusion entre les deux tôles.

La pression maintient le contact entre l'électrode et l'assemblage de tôles. Pour souder, une pince plaque l'assemblage avec des électrodes en cuivre, matière à la fois excellente conductrice de l'électricité et de la chaleur. Ce choix permet de réduire la zone chauffée, qui se trouve limitée à la zone de contact entre les deux tôles à souder.

Une fois le point de fusion atteint, la pression est maintenue, et l'intensité électrique est arrêtée pour refroidir le point de soudage avant de séparer les électrodes des tôles assemblées puis de procéder au point de soudage suivant.

Les paramètres de soudage sont donc dépendants de la résistance électrique des tôles, de la résistance d'interface entre les tôles et l'électrode, de l'épaisseur totale de l'assemblage et du diamètre des électrodes. Ce procédé est couramment utilisé dans l'assemblage de tôle d'acier de faible épaisseur (< 6 mm). Cette technique bénéficie d'un savoir-faire très important et d'une bonne productivité.

Généralement, pour la fabrication des électrodes de soudage traditionnelles, les documents de l'état de la technique enseignent de mettre en oeuvre des procédés visant à obtenir une structure de produit la plus homogène possible, et comportant des grains présentant une taille la plus petite possible.

Plus précisément, les électrodes de soudage traditionnelles, présentant une structure métallurgique avec des grains de petite taille, sont obtenues selon le procédé suivant :
1) fusion et coulée dans un moule puis solidification afin d'obtenir une barre présentant un diamètre généralement compris entre 150 et 350 mm ;
2) filage à une température comprise entre 980 et 1040°C pour obtenir un diamètre de 20 à 30nm et trempe ou filage à une température supérieure à 850°C suivi d'un traitement thermique à une température comprise entre 980 et 1040°C puis trempe ;
3) étirage pour obtenir une barre d'un diamètre compris généralement entre 12 et 19 mm ;
4) traitement de vieillissement ou de revenu ;
5) cisaillage de la barre afin d'obtenir des lopins, puis poinçonnage afin de conférer sa forme définitive à l'électrode ou usinage à partir de la barre par enlèvement de matière pour obtenir la forme définitive de l'électrode.

L'étape 2) de corroyage à chaud du procédé ci-dessus permet d'obtenir une électrode avec une structure métallurgique recristallisée extrêmement fine et homogène, caractérisée notamment par une taille de grain micrométrique, typiquement de l'ordre de 10µm.

En ce qui concerne la taille des grains, on connait par exemple, par le document de brevet FR 2 855 438, un alliage de cuivre, avec d'autres métaux choisis parmi le chrome, le zirconium, le fer, le phosphore et l'argent, ces éléments se trouvant présents en une proportion pondérale totale inférieure ou égale à 1,5%. De tels alliages permettraient d'augmenter la durée de vie des électrodes. Ce document enseigne de réduire la taille des grains en dessous de 10µm pour augmenter la limite d'élasticité de l'alliage obtenu.

Le document de brevet FR 2 771 038 est quant à lui relatif à un procédé pour la fabrication d'une électrode de soudage par résistance par points en alliage à base de cuivre, permettant d'obtenir un alliage présentant une structure comportant des grains de cuivre dont la taille est comprise entre 0,1 et 0,4µm.

On connait encore, par le document EP 0 256 215, un procédé permettant d'obtenir une structure de grains dont la taille est comprise entre 30 et 100µm.

Le document JP 58 177 429 concernant un alliage de cuivre présentant une haute résistance, et pouvant notamment être appliqué aux électrodes de soudage par point, enseigne également de réduire la taille des grains par addition de tantale à la composition de l'alliage.

Le document FR 2 520 757 divulgue une électrode de soudage obtenue par un procédé comprenant les étapes générales de fusion, de coulée et de refroidissement.

Le document FR 1 313 451 concerne une composition d'alliage comprenant seulement du cuivre, du chrome, du zirconium et du silicium pour la fabrication d'une électrode de soudage.

Néanmoins, les cycles de soudage successifs entraînent une usure de la surface de l'électrode, et plus particulièrement de la face active de l'électrode qui est au contact de la tôle.

Il existe principalement deux phénomènes d'usure des électrodes traditionnelles.

D'une part, la couche de surface de l'électrode est susceptible de se détacher latéralement car elle est soumise à des températures particulièrement élevées. Ce phénomène d'usure est dénommé fluage.

D'autre part, le contact entre la tôle et l'électrode engendre une réaction chimique de transfert mutuel de matière entre la tôle et l'électrode. En outre, ce phénomène de corrosion est augmenté du fait de la présence de zinc au niveau du revêtement des tôles devant être assemblées. En effet, le zinc du revêtement de la tôle se diffuse dans le cuivre de la surface de l'électrode, formant une phase β, ou couche jaune, à laquelle sont susceptibles de se coller des atomes de fer provenant de la tôle. Ce collage induit des arrachements de matière à la surface de l'électrode, lors de l'ouverture de la pince de soudage, qui vont accélérer la dégradation de surface de ladite électrode.

Du fait de ces phénomènes de fluage et de corrosion, les électrodes traditionnelles ont une durée de fonctionnement limitée. Elles s'élargissent en leur extrémité, ce qui modifie les paramètres, en réduisant notamment la densité de courant, aboutissant par conséquent à une altération de la qualité du point soudé.

Les industriels doivent donc rechercher des solutions pour retarder ou compenser la dégradation de surface de l'électrode.

Dans des conditions de soudage habituelles, certaines actions menées par les industriels sont suffisantes, par exemple une modification de la forme de l'électrode, un rodage de surface, ou encore une incrémentation du courant.

Toutefois, ces derniers temps, les industriels cherchent à augmenter, d'une part, les cadences de soudage sur les lignes de ferrage robotisées et, d'autre part, les efforts de serrage sur les tôles à haute limite élastique. En outre, on cherche également à réduire l'épaisseur des tôles, ou encore à réaliser des soudages dissymétriques ou triple épaisseur.

Ces progrès récents sont responsables d'une sollicitation thermomécanique plus importante des électrodes.

Or, face à ces évolutions, il est important de maintenir une parfaite maîtrise de la qualité du point soudé.

De ce fait, la présente invention est relative notamment à un procédé permettant la fabrication d'électrodes de soudage présentant une meilleure résistance aux phénomènes d'usure et, par conséquent, des performances de soudage supérieures aux électrodes traditionnelles.

A cet effet, l'invention concerne notamment une électrode de soudage en un alliage dont la composition consiste en du cuivre, du chrome, du zirconium et du phosphore et/ou du magnésium.

Ladite électrode est notamment susceptible d'être obtenue par un procédé décrit ci-dessous et comporte une proportion de chrome comprise entre 0,4 et 0,8% en masse et une proportion de zirconium comprise entre 0,02 et 0,09% en masse.

La proportion totale en phosphore et/ou en magnésium est supérieure à 0,005% en masse, la proportion de magnésium est inférieure à 0,1% en masse et la proportion de phosphore est inférieure à 0,03 % en masse.

Le reste de la composition consiste en du cuivre.

La structure de l'électrode comporte des précipités de chrome incohérents dont plus de 90% ont une surface projetée inférieure à 1µm², et lesdits précipités de chrome incohérents présentent des dimensions comprises au moins entre 10 et 50 nm. Ladite électrode présente en outre une structure fibrée, visible suivant une coupe transversale de la face active de ladite électrode après surfaçage et attaque chimique, ladite structure étant constituée, d'une part, d'une pluralité de fibres radiales, lesdites fibres présentant une épaisseur inférieure à 1 mm, de préférence inférieure à 0,5 mm et, d'autre part d'une zone sensiblement centrale sans fibrage ayant un diamètre inférieur à 5 mm, de préférence inférieur à 3 mm et la conductibilité électrique de ladite électrode étant supérieure à 85% IACS (pour International Annealed Copper Standard).

L'invention concerne en outre un procédé de fabrication d'une électrode de soudage par coulée continue à partir d'un alliage dont la composition consiste en du chrome dans une proportion comprise entre 0,4 et 0,8% en masse, du zirconium dans une proportion comprise entre 0,02 et 0,09% en masse, du phosphore et/ou du magnésium dans une proportion totale supérieure à 0,005% en masse, la proportion de magnésium étant inférieure à 0,1% en masse et la proportion de phosphore étant inférieure à 0,03 % en masse, le reste de la composition étant du cuivre, ledit procédé comportant au moins les étapes suivantes :
a) fusion des différents composants de l'alliage, à savoir au moins le cuivre, le chrome, le zirconium et du phosphore et/ou du magnésium à une température supérieure à 1200°C, de préférence entre 1200°C et 1300°C ;
b) coulée continue à travers une filière cylindrique présentant un diamètre d permettant d'obtenir une barre d'un diamètre proche du diamètre d de la filière réalisée avec une température de maintien du métal liquide dans le four de coulée comprise entre 1100 et 1300°C, de préférence entre 1150 et 1250°C;
c) solidification de ladite barre et refroidissement jusqu'à une température inférieure à 100°C, la vitesse de refroidissement étant au moins égale à 10°C/s à partir de 1060°C (fin de solidification), au moins égale à 15°C/s à partir de 1040°C, au moins égale à 20°C/s à partir de 1030°C, au moins égale à 25°C/s à partir de 1000°C, au moins égale à 30°C/s à partir de 900°C et au moins égale à 20°C/s pour des températures inférieures à 900°C.

En d'autres termes, la vitesse de refroidissement est au moins égale à 10°C/s lorsque la température de la barre est supérieure à 1060°C, jusqu'à atteindre cette température, puis au moins égale à 15°C/s lorsque la température est comprise entre 1060 et 1040°C, puis au moins égale à 20°C/s lorsque la température est comprise entre 1040 et 1030°C, puis au moins égale à 25°C/s lorsque la température est comprise entre 1030 et 1000°C, puis au moins égale à 30°C entre 1000 et 900°C.

Ensuite, pour des températures de barre inférieures à 900°C, la vitesse de refroidissement peut être au moins égale à 20°C/s et ce jusqu'à ce que la barre soit refroidie à une température au plus de 100°C.
d) déformation à froid pour obtenir un barreau d'un diamètre inférieur à 20 mm ;
e) traitement de vieillissement ou de revenu à une température comprise entre 450 et 550°C pendant un temps compris entre 1 et 2h, ou à une température de 550 °C pendant un temps compris entre 10 et 30min, ou à une température de 500°C pendant un temps compris entre 30min et 2h, ou à une température de 450°C pendant un temps compris entre 2 et 6h, ou encore à une température de 400°C pendant un temps de plus de 20h ;
f) cisaillage dudit barreau afin d'obtenir des lopins puis poinçonnage ou usinage par enlèvement de matière afin de conférer à ladite électrode sa forme définitive,
dans lequel la structure métallurgique de la face active de ladite électrode comporte des précipités de chrome incohérents dont plus de 90% ont une surface projetée inférieure à 1µm², lesdits précipités de chrome incohérents présentant des dimensions comprises au moins entre 10 et 50 nm, ladite électrode présentant en outre une structure fibrée, visible suivant une coupe transversale de la face active de ladite électrode après surfaçage et attaque chimique, ladite structure étant constituée, d'une part, d'une pluralité de fibres radiales, lesdites fibres présentant une épaisseur inférieure à 1 mm, et, d'autre part, d'une zone sensiblement centrale sans fibrage ayant un diamètre inférieur à 3 mm, et la conductibilité électrique de ladite électrode étant supérieure à 85% IACS (pour International Annealed Copper Standard).

Selon d'autres caractéristiques optionnelles du procédé:
- l'étape b) de coulée est réalisée avec maintien d'une température de métal liquide dans le four de coulée comprise entre 1150 et 1250°C ;
- le refroidissement de la barre à l'étape c) est effectué à une vitesse de refroidissement au moins égale à 30°C/s pour des températures inférieures à 900°C ; en d'autres termes, pour des températures de barre inférieures à 900°C, et notamment entre 900 et 700°C, la vitesse de refroidissement est préférentiellement au moins égale à 30°C/s et ce jusqu'à ce que la barre soit refroidie à une température au plus de 100°C.
- ledit diamètre d de la filière est compris entre 20 et 70 mm, de préférence entre 20 et 40 mm ;
- au cours de l'étape d) de déformation à froid, une opération d'usinage extérieure, inférieure à 0,5 mm d'épaisseur, est effectuée pour éliminer les défauts de surface générés lors de l'étape c) de solidification.

Enfin, l'invention est également relative à une utilisation de l'électrode dans un procédé de soudage résistif par point, pour le soudage d'au moins deux tôles en acier revêtues de zinc ou d'un alliage comprenant du zinc, ledit revêtement présentant une épaisseur inférieure à 10 µm et lesdites tôles présentant une épaisseur inférieure ou égale à 1,5 mm.

L'avantage principal découlant de la présente invention consiste en ce que les performances et la durée de vie des électrodes, utilisées notamment pour le soudage par résistance par points, sont nettement améliorées.

Plus précisément, au moyen desdites électrodes, on améliore substantiellement la qualité du point soudé, notamment en augmentant la protection contre la corrosion au niveau des points soudés. Il est également envisageable, pour les industriels, d'augmenter les cadences de soudage sur les lignes robotisées, ainsi que les efforts de serrage sur tôles à haute limite élastique. Les tôles soudées peuvent avoir une épaisseur plus faible, et lesdites électrodes permettent également la réalisation de soudages dissymétriques (plus de deux tôles, présentant éventuellement des épaisseurs différentes ou dont l'acier est différent). En outre, les coûts directs de soudage sont réduits, notamment en ce qui concerne les consommables, la main d'oeuvre, ou encore l'énergie.

D'autres caractéristiques et avantages de l'invention ressortiront de la description détaillée qui va suivre se rapportant à un exemple de réalisation donné à titre indicatif et non limitatif.

La compréhension de cette description sera facilitée en se référant aux dessins joints, dans lesquels :

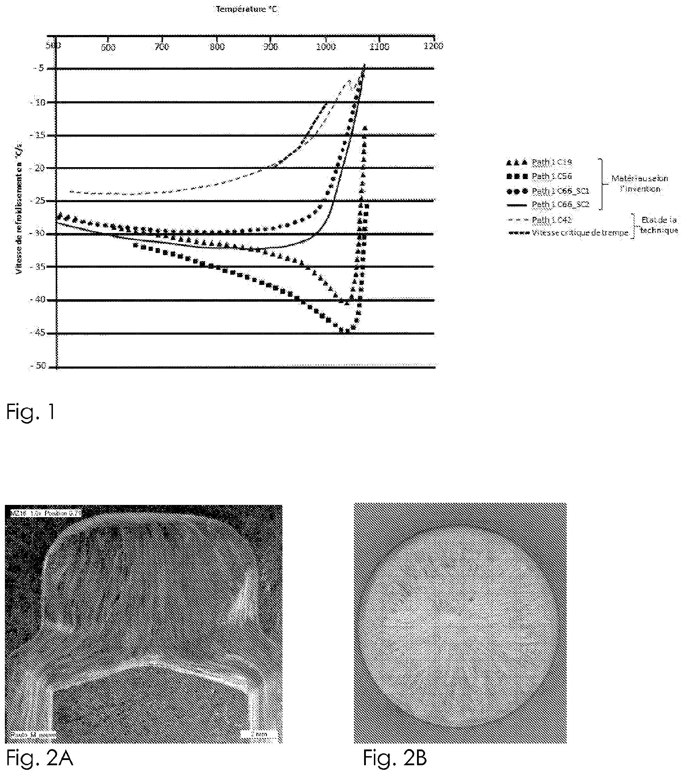

- la figure 1 est une représentation graphique de la vitesse de refroidissement préférentielle (en ordonnées - exprimée en degrés Celsius par seconde) en fonction de la température (en abscisses - exprimée en degrés Celsius). Les courbes en pointillés représentent la vitesse appliquée traditionnellement pour un matériau (Path1_C42) aux propriétés habituelles de l'état de la technique (pointillés fins) et la vitesse critique de trempe de l'état de la technique (pointillés épais). Les autres courbes représentent l'évolution de la vitesse de refroidissement appliquées dans le procédé et permettant l'obtention des électrodes selon l'invention (Path1 C19 ; Path1 C56 ; Path1 C66_SC1 et Path1 C66_SC2)

- la figure 2A représente, après attaque chimique, une vue en coupe longitudinale au microscope optique de la structure de l'électrode obtenue par la mise en oeuvre du procédé selon la présente invention, après l'étape de poinçonnage, tandis que la figure 2B représente une vue en coupe transversale de cette même électrode.

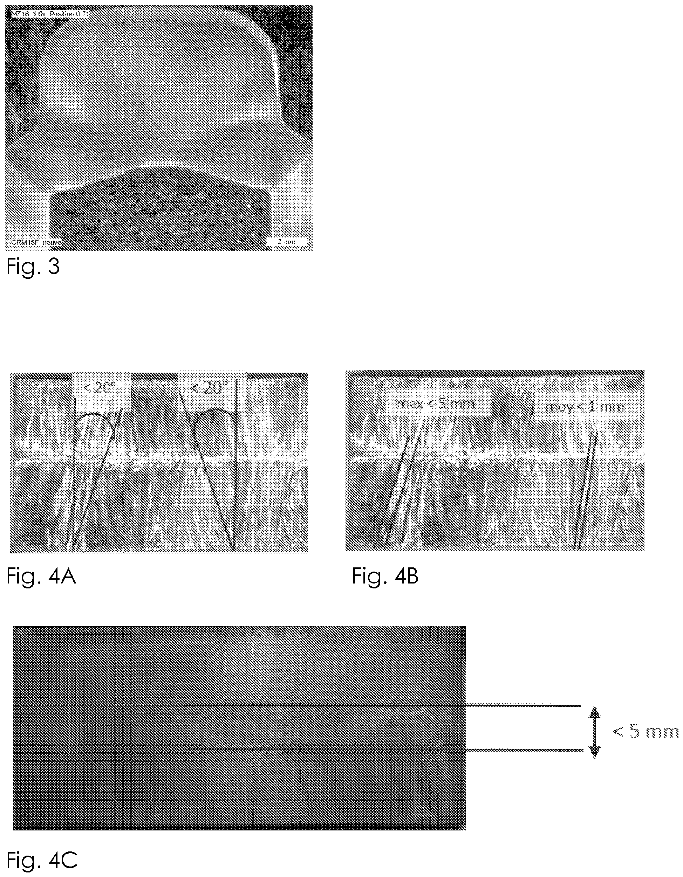

- la figure 3 représente une vue en coupe longitudinale d'une électrode obtenue à partir d'un procédé selon l'état de la technique ;
- les figures 4A à 4D représentent la texture nécessaire pour le matériau de l'électrode obtenue par la mise en oeuvre du procédé selon l'invention ;

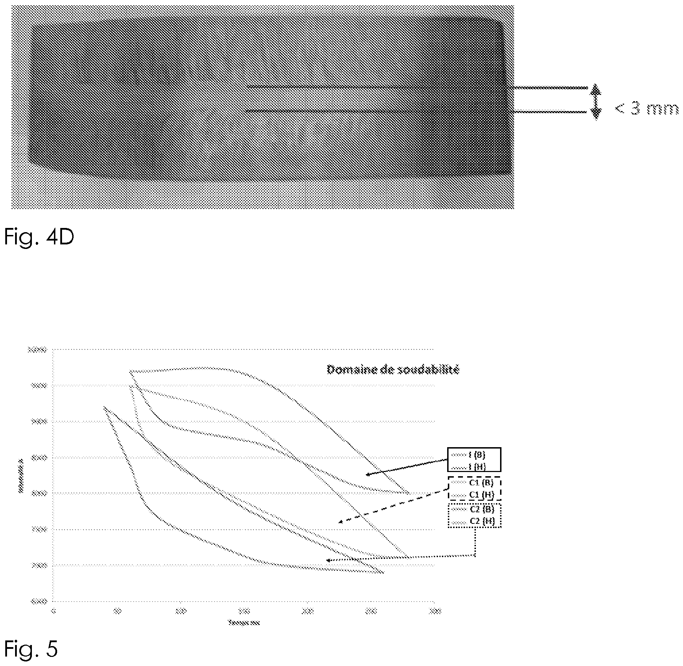

- la figure 5 est un graphique illustrant le domaine de soudabilité pour une électrode de l'invention (I (B) - I (H)) en comparaison avec deux électrodes de l'état de la technique (C1 (B) - C1 (H) et C2 (B) - C2 (H)), les courbes du graphique représentant l'intensité (A) en fonction du temps (ms) ; il est visible, sur ce graphique, que le domaine de soudabilité des électrodes de l'invention se fait avec une intensité électrique plus élevée.

La présente invention a pour objet notamment un procédé pour la fabrication d'une électrode de soudage par résistance à partir d'un alliage dont la composition consiste en du cuivre, du chrome, du zirconium, et du phosphore et/ou du magnésium.

Le procédé de fabrication de l'électrode est un procédé de coulée continue et il comprend au moins les étapes suivantes :
a) on fusionne les différents composants de l'alliage à une température supérieure à 1200°C, de préférence entre 1200°C et 1300°C ;
b) on effectue une coulée continue à travers une filière cylindrique, ou un moule cylindrique, présentant un diamètre d permettant d'obtenir une barre;
   Cette coulée peut être réalisée à une température de maintien du métal liquide dans le four de coulée comprise entre 1100 et 1300°C, de préférence entre 1150 et 1250°C.
c) on solidifie ladite barre et on la refroidit, de préférence à une vitesse de refroidissement définie jusqu'à une température inférieure à 100°C, la vitesse de refroidissement étant au moins égale à 10°C/s jusqu'à atteindre une température de la barre de 1060°C, puis au moins égale à 15°C/s entre 1060 et 1040°C, puis au moins égale à 20°C/s entre 1040 et 1030°C, puis au moins égale à 25°C/s entre 1030 et 1000°C, puis au moins égale à 30°C entre 1000 et 900°C, puis au moins égale à 20°C/s pour des températures inférieures à 900°C, jusqu'à ce que la barre soit refroidie à une température au plus de 100°C.
   La vitesse de refroidissement est donc d'au moins 20°C/s et ce jusqu'à atteindre au moins une température de barre de 100°C.
   Préférentiellement, la vitesse de refroidissement est au moins égale à 30°C/s pour des températures inférieures à 900°C, jusqu'à ce que la barre soit refroidie à une température au plus de 100°C.
   Avantageusement, le refroidissement de ladite barre de l'étape c) est effectué à une vitesse de refroidissement toujours au moins égale à 30°C/s pour des températures inférieures à 700°C.
   Cette étape de solidification et refroidissement n'inclut pas de traitement thermique spécifique, la mise en solution pouvant se faire dès la fin de la solidification à 1060°C.
d) on procède à une déformation à froid de ladite barre pour obtenir un barreau d'un diamètre inférieur à 20 mm, de préférence compris entre 12 et 19 mm ; de manière optionnelle, une opération d'usinage extérieure, avantageusement inférieure à 0,5 mm d'épaisseur, peut être effectuée de sorte à éliminer des défauts de surface éventuellement générés par l'étape précédente ;
e) on effectue un traitement de vieillissement, ou traitement de revenu, au cours duquel le barreau est chauffé et, enfin,
f) on effectue un cisaillage dudit barreau afin d'obtenir des lopins puis un poinçonnage ou un usinage par enlèvement de matière afin de conférer à ladite électrode sa forme définitive.

Le traitement de vieillissement est un traitement thermique pouvant être réalisé de différentes manières.

En effet, il est réalisé à une température comprise entre 450 et 500°C pendant une période de 1 à 2h, ou encore à 550°C pendant 10 à 30mn, ou encore à 500°C pendant 30mn à 2h, ou encore à 450°C pendant 2h à 6h, ou encore à 400°C pendant plus de 20h.

De manière particulièrement avantageuse, dans l'étape b) du procédé de l'invention, le diamètre d de la filière cylindrique de coulée continue est inférieur à 70 mm.

De préférence, ledit diamètre d est compris entre 20 et 70 mm et, plus préférentiellement encore, ce diamètre est compris entre 20 et 40 mm.

En outre, la vitesse de refroidissement appliquée lors de l'étape c) du procédé et permettant la solidification de la barre puis le refroidissement solide, est particulièrement importante, entrainant une solidification rapide et un refroidissement périphérique extrêmement puissant.

Préférentiellement, la vitesse de refroidissement est également variable en fonction de la température de ladite barre.

Plus précisément, ladite vitesse de refroidissement est, avantageusement, au moins égale à 10°C/s lorsque la barre a une température supérieure à 1060°C, puis au moins égale à 15°C/s lorsque la température est comprise entre 1060 et 1040°C, puis au moins égale à 20°C/s lorsque la température est comprise entre 1040 et 1030°C, puis au moins égale à 25°C/s lorsque la température est comprise entre 1030 et 1000°C, puis au moins égale à 30°C/s entre 900 et 1000°C. Pour des températures de barre inférieures à 900°C, le refroidissement est préférentiellement effectué à une vitesse au moins égale à 20°C/s.

La vitesse de refroidissement peut encore être au moins égale à 30°C/s pour des températures inférieures à 900°C.

Les vitesses de refroidissement préférentielles du présent procédé sont représentées sur le graphique de la figure 1, en comparaison avec celles de l'état de la technique, représentées par la courbe en traits pointillés. La vitesse de refroidissement est exprimée en °C/s, en fonction de la température de la barre, qui est, elle, exprimée en °C.

De préférence, dans le procédé selon l'invention, à l'inverse du procédé traditionnel, le refroidissement n'est pas appliqué sur un solide mais sur un liquide et commence dès le solidus, c'est-à-dire à une température de l'ordre de 1070°C. En particulier, il a été mis en évidence un intervalle de température, entre 1060 et 900°C, pour une amélioration de la mise en solution avec une vitesse de refroidissement minimum qui a été reprise ci-dessus lors de la définition du procédé.

En dessous de 900°C la mise en solution est impossible, on s'assurera pour les températures inférieures à 900°C de poursuivre le refroidissement avec un minimum de 20°C/s pour ne pas générer un vieillissement non maitrisé.

Plus précisément, la solidification et le refroidissement très rapides, jusqu'à une température où la diffusion des atomes de chrome est limitée, permet une répartition homogène des précipités cohérents et incohérents de chrome.

Ces conditions de refroidissement, qui sont en outre appliquées sur un moule cylindrique ayant un diamètre réduit entre 20 et 70 mm, de préférence entre 20 et 40 mm, participent à l'obtention d'une barre avec une texture de solidification colonnaire orientée de manière radiale. Cette texture est visible par réalisation d'une coupe transversale de ladite barre, et sur l'ensemble du volume de cette dernière. Au contraire, une telle homogénéité ne peut être atteinte sur des barres de fonderie de grande section obtenues par la mise en oeuvre du procédé traditionnel, et leur texture sera plus variable.

La filière ou le moule, présentant une forme cylindrique, est préférentiellement entourée d'une enveloppe au sein de laquelle circule soit une huile, soit un gaz réfrigérant, ou encore de l'eau, de sorte à permettre la solidification et le refroidissement.

Un autre avantage du procédé selon l'invention réside dans le fait qu'il permet d'éviter une recristallisation dynamique à chaud, due à un réchauffage et une déformation simultanée dans le procédé traditionnel. De ce fait, les précipités et textures intéressants issus de la mise en oeuvre du procédé de l'invention sont conservés.

Au sein de l'alliage de base utilisé pour la fabrication des électrodes de soudage innovantes, on retrouve, de préférence, une teneur en chrome inférieure à 1% en masse, et, plus préférentiellement encore, comprise entre 0,4 et 0,8% en masse.

Par le biais du procédé selon l'invention, des précipités incohérents de chrome, c'est-à-dire des particules sans relation cristallographique avec la matrice, sont en excès de limite de solubilité et vont se présenter différemment des précipités de chrome issus du procédé traditionnel qui a été décrit ci-dessus.

En effet, dans le procédé de l'invention, l'application du traitement de trempe dès la solidification de l'alliage, qui est complète à une température de l'ordre de 1070°C, permet de maximiser la solubilité du chrome dans le cuivre et de maintenir l'eutectique cuivre chrome aux joints de grain.

Une proportion de chrome entre 0,4 et 0,8% est particulièrement optimale. En effet, une proportion inférieure à 0,4% ne permettrait pas de produire la précipitation de chrome recherchée et une proportion supérieure à 0,8% serait susceptible d'engendrer des précipités de chrome de taille trop importante, avec apparition de décohésion lors de l'étape d) de transformation à froid.

La texture de solidification colonnaire très fine, obtenue par la mise en oeuvre du procédé de l'invention, permet de manière particulièrement avantageuse de répartir l'hétérogénéité de composition de chrome (chrome en solution solide, chrome eutectique et chrome métal) de manière homogène, et ce dans l'ensemble du volume de l'électrode de soudage obtenue par ledit procédé.

Ces précipités de chrome sont à l'origine de l'amélioration des performances de soudage de l'électrode, augmentant d'une part la résistance de cette dernière au fluage à chaud et, d'autre part, retardant ou bloquant la diffusion du fer et du zinc qui sont à l'origine de la corrosion chimique de la face active de ladite électrode.

Le procédé de l'invention, et notamment l'application préférentielle du refroidissement dès le solidus, favorise également une répartition homogène des précipités cohérents de chrome, c'est-à-dire les précipités présentant une continuité avec la structure cristallographique de la matrice.

Par la mise en oeuvre du procédé de l'invention, l'électrode obtenue présente également une structure fibrée, due à la présence de précipités de cuivre, ou grains, qui présentent eux-mêmes une forme très fibrée.

La structure fibrée est notamment visible sur la figure 2A qui représente une vue en coupe longitudinale d'une électrode après poinçonnage, ainsi que sur la figure 2B qui représente une vue en coupe transversale de ladite électrode.

Suivant la coupe longitudinale de la figure 2A, il apparait que le fibrage est symétrique droite gauche, les fibres partant de la face active, et à proximité de la face interne de refroidissement de l'électrode et se dirigeant en se resserrant vers la jupe de l'électrode.

Suivant la coupe transversale de la figure 2B, les fibres sont assimilables aux rayons d'une roue dont le moyeu, correspondant à la zone centrale de l'électrode sans fibrage distinctif présente un diamètre inférieur à 5 mm, de préférence inférieur à 3 mm. Les fibres radiales fines présentent quant à elles une épaisseur avantageusement inférieure à 1 mm, et, plus avantageusement encore, inférieure à 0,5 mm.

Cette texture fibrée, très caractéristique de l'électrode obtenue par mise en oeuvre du procédé de l'invention, est la conséquence directe de la structure métallurgique obtenue après l'étape c) dudit procédé, et est très différente de la structure fine et homogène des électrodes obtenues par la mise en oeuvre du procédé traditionnel de l'état de la technique, une telle structure étant illustrée sur la figure 3.

Le fibrage de l'électrode obtenue par le présent procédé, notamment dû à la présence de grains de cuivre en aiguille ayant une longueur importante, permet une amélioration de la résistance aux champs de sollicitations thermomécaniques, comprenant le champ de déformation et le champ de température, de la face active de ladite électrode lors du soudage.

Plus particulièrement, le fibrage de l'électrode de l'invention favorise, pendant le soudage des tôles, une évacuation des calories de manière radiale et longitudinale, depuis la zone centrale de l'électrode, où la température est maximale, vers les zones froides, c'est-à-dire la face interne et la périphérie de l'électrode. Par conséquent, l'électrode de l'invention est plus résistante notamment au phénomène de fluage.

Il a déjà été évoqué, précédemment, la composition de l'alliage de base pour obtenir ladite électrode de l'invention. Cet alliage comporte du cuivre et du chrome, ce dernier composant étant présent dans l'alliage dans une proportion avantageusement comprise entre 0,4 et 0,8% en masse.

Outre ces deux constituants, l'alliage selon l'invention comprend également du zirconium dans une proportion comprise de préférence entre 0,02 et 0,09% en masse. Une telle proportion permet avantageusement d'éviter de générer des précipités qui seraient susceptibles de favoriser une fissuration à froid du matériau.

Il est également avantageux que l'alliage de base comporte du magnésium et/ou du phosphore, la proportion cumulée de ces deux éléments étant préférentiellement supérieure à 0,005% en masse.

Ces éléments, qui sont à la fois plus désoxydant que le chrome et moins que le zirconium, facilitent une bonne maîtrise de la teneur en zirconium résiduel lorsque des grandes quantités de production sont envisagées.

Le magnésium peut éventuellement remplacer le zirconium ou réduire la proportion de ce dernier au sein de l'alliage, en restant dans une proportion inférieure à 0,1% en masse. En effet, une teneur en magnésium supérieure pourrait engendrer une baisse de la conductibilité du cuivre. De la même manière, la proportion en phosphore est, de préférence, inférieure à 0,03% en masse.

La présente invention est également relative à une électrode susceptible d'être obtenue par le procédé décrit précédemment.

Comme déjà mentionné précédemment, lesdites électrodes de l'invention présentent des propriétés microscopiques originales et différentes des électrodes traditionnelles.

Des analyses par microscopie à transmission de la structure du matériau des électrodes de l'invention, avant et après soudage, ont permis de mettre en évidence des différences par rapport à la structure microscopique des électrodes traditionnelles, et notamment sur la morphologie des grains cristallins ainsi que sur les dimensions et la répartition des précipités de chrome.

En particulier, on observe à l'échelle microscopique que le matériau de l'électrode selon l'invention comporte plus de 90% des précipités incohérents de chrome qui présentent une surface projetée inférieure à 1µm².

En outre, à l'échelle nanométrique, on observe, en plus des précipités de chrome cohérents ayant des dimensions de l'ordre de 2 à 5 nm, une population de précipités de chrome incohérents avec des dimensions comprises entre 10 et 50 nm, et plus précisément entre 10 et 20 nm.

Ces précipités de chrome incohérents sont caractéristiques des électrodes de l'invention et ne sont pas visibles au niveau du matériau des électrodes traditionnelles.

Les analyses effectuées ont également démontré une évolution dimensionnelle de ces précipités incohérents de chrome, pendant l'étape de soudage des tôles au moyen de l'électrode de l'invention.

En effet, au cours du soudage, on observe une coalescence des précipités à l'approche de la face active de l'électrode et, plus précisément, des précipités nanométriques incohérents de 30 à 50 nm dans la couche β et de 100 à 150 nm dans la couche γ.

Typiquement, la couche β de la couche de réaction chimique est la plus éloignée de la surface de l'électrode. C'est une couche jaune de diffusion du zinc dans le cuivre, à 40% de zinc. En surface, la couche de réaction chimique comporte une couche riche en fer, typiquement 25%, qui se forme lors du collage de la tôle sur la surface de l'électrode à une température supérieure à 850°C. Enfin, entre la couche β et la couche riche en fer se trouve la couche γ à 55% de zinc.

D'autres analyses menées sur les électrodes de l'invention ont montré que les précipités incohérents de chrome présents dans la couche γ s'enrichissent en fer et, de ce fait, permettent de bloquer la diffusion du fer.

Enfin, des essais de caractérisation mécanique à chaud ont également été conduits sur des électrodes obtenues par le procédé de l'invention. Les résultats de ces essais ont montré que la température de fluage est augmentée de 100°C avec les présentes électrodes, par rapport à la température de fluage des électrodes traditionnelles.

Plus précisément, le fluage de la face active d'une électrode traditionnelle devient sensible, pendant l'opération de soudage, à une température de l'ordre de 700°C. En effet, avec l'adoucissement de surface de l'électrode, il y a fluage de la surface et fissuration de la couche γ, ce qui favorise une diffusion du fer dans la couche γ puis dans la couche β sous forme de précipités FeZn. La couche β devient résistive, et s'échauffe au-delà de 850°C, entrainant la disparition de la couche γ. Par conséquent, la matière de l'électrode traditionnelle va commencer à s'arracher au fur et à mesure des points de soudage, entrainant une dégradation rapide du point de soudure.

Au contraire, pour une électrode selon l'invention, cette température de fluage est de l'ordre de 800°C, ce qui permet de retarder la sollicitation mécanique de la couche γ, favorisant ainsi le maintien protecteur de ladite couche γ au niveau de la face active de ladite électrode.

De de ce fait, les électrodes obtenues par la mise en oeuvre du présent procédé présentent une durée de vie augmentée et des performances au soudage améliorées.

Un exemple préférentiel de mise en oeuvre du présent procédé est détaillé ci-dessous, afin d'obtenir des électrodes aux caractéristiques et performances améliorées. Cet exemple ne doit toutefois pas être considéré comme étant limitatif de l'invention.

### Exemple 1 : procédé d'obtention d'une électrode de soudage améliorée

Dans un premier temps, on procède à une fusion des constituants de l'alliage de base, dont du cuivre et du chrome dans une proportion comprise entre 0,4 et 0,8 %.

Afin de maintenir une bonne conductibilité du cuivre, on utilise une qualité de cuivre électrolytique, c'est-à-dire un cuivre affiné par voie électrolytique.

L'alliage peut également comporter des éléments d'addition (zirconium, magnésium, phosphore) dans les proportions qui ont été définies précédemment dans la description.

Ensuite, l'étape de coulée continue est effectuée au travers d'un moule cylindrique ayant un diamètre d égal à 28 mm, à une vitesse d'extraction comprise entre 0,3 et 1m/min.

Les conditions de refroidissement en sortie de moule sont les suivantes :
- La vitesse de refroidissement en sortie de filière est de 10°C/s à 1060°C, de 15°C/s à 1040°C, de 20°C/s à 1030°C, de 25°C/s à 1000°C, de 30°C/s à 960°C et d'au moins 20°C/s pour des températures inférieures à 900°C.
   En somme, la vitesse de refroidissement respecte une courbe inversement croissante pour les températures > 900°C par rapport à la température de telle sorte que cette vitesse atteigne au moins 10°C/s à 1060°C, au moins 15°C/s à 1040°C, de 20°C/s à 1030°C, de 25°C/s à 1000°C, de 30°C/s à 960°C et de 30°C/s à 900°C, préférentiellement supérieure à 20°C/s pour des températures inférieures à 900°C.
- Le débit de refroidissement, qui circule sur la paroi extérieure du moule et évacue les calories pour solidifier et refroidir le matériau de l'électrode est compris entre 20 et 60 L/min.
   La texture des barres est ensuite contrôlée, et ce contrôle se fait à partir des mesures suivantes :
- Le gradient thermique, dont la composante longitudinale est la plus faible possible, typiquement inférieure à 20°, est représenté sur la figure 4A annexée ;
- La dimension des grains colonnaires, visible sur la figure 4B, et en particulier la largeur, qui doit être de préférence en moyenne inférieure à 1 mm et au maximum égale à 5 mm ;
- L'ondulation de l'axe de solidification de la barre qui doit être avantageusement inférieure à 5 mm, est représentée sur la figure 4C ;
- La finesse de la zone centrale de la barre, ne comportant pas de fibrage, qui est avantageusement inférieure à 3 mm, visible sur la figure 4D.

Les étapes suivantes du procédé de l'invention sont également mises en oeuvre et, en particulier, les étapes d) et e) de déformation à froid permettent de favoriser un cisaillement des précipités incohérents de chrome et leur globulisation, c'est-à-dire leur mise en forme sphérique.

La finesse initiale des précipités incohérents de chrome issus de la solidification et l'importance de la déformation à froid vont permettre de définir la densité et les dimensions des précipités à l'état final, et d'obtenir une population de précipités incohérents de 10 à 50 nm.

A l'issue du procédé, la conductibilité électrique de l'électrode et sa dureté sont contrôlées, avant un premier soudage.

De manière usuelle, la conductibilité d'une électrode en alliage cuivreux est établie en pourcentage IACS, ou % IACS pour International Annealed Copper Standard, avec 100% IACS pour une conductivité de 58,108 MS/m (proportionnelle) et une résistivité de 172,41µΩ/cm (anti-proportionnelle)

Avantageusement, pour présenter des performances intéressantes au soudage, la conductibilité électrique de l'électrode de l'invention doit être supérieure à 85% IACS, autrement dit supérieure à 48,8 MS/m, et la dureté Vickers doit être supérieure à 160HV.

La présente invention est également relative à un procédé de soudage résistif par point mettant en oeuvre l'électrode de l'invention pour le soudage d'au moins deux tôles en acier revêtues de zinc ou d'un alliage comprenant du zinc, lesdites tôles présentant une épaisseur inférieure ou égale à 1,5 mm.

Ladite électrode, en tant que paramètre de soudage, permet d'influer notamment sur la qualité des points soudés, qui est améliorée, ainsi que sur les cadences de soudage et les efforts de serrage sur tôles, qui sont augmentées. En outre, par la mise en oeuvre d'un procédé de soudage avec ladite électrode, la corrosion est réduite au niveau des points soudés.

On peut également effectuer le soudage de tôles d'épaisseur réduite ou d'épaisseurs différentes, de plus de deux tôles, ou de tôles en acier différent, ce qui est difficile au moyen des électrodes de l'état de la technique.

D'autres paramètres du soudage influent également sur les objectifs susmentionnés, et notamment, la fréquence, l'intensité, le nombre de périodes, l'effort de serrage, les cycles d'accostage et de forgeage, le refroidissement par circulation eau (pression, débit, température), le rodage, la composition et l'épaisseur de l'acier, l'huilage de la tôle, la composition et l'épaisseur du revêtement.

Précisément, lors du soudage de tôles entre elles, la première zone sollicitée est le centre de la face active. Cela est dû à la forme bombée de la face active. Or, au centre de l'électrode selon l'invention se trouve une zone sans fibrage, qui est constitutionnellement moins performante.

Comme déjà évoqué, cette zone présente préférentiellement un diamètre inférieur à 3 mm, notamment lorsque l'on cherche à obtenir un diamètre de point soudé initial de l'ordre de 6 mm.

De manière avantageuse, afin d'améliorer les performances de soudage lors de l'utilisation des électrodes de l'invention, l'intensité de démarrage de soudage est augmentée et l'incrémentation est diminuée, par rapport au procédé de soudage utilisant les électrodes traditionnelles.

Deux exemples ci-dessous permettent de comparer les performances de soudage et le domaine de soudabilité des électrodes de l'invention avec les électrodes traditionnelles.

### Exemple 2 : Procédé de soudage de tôles - comparaison entre une électrode traditionnelle et une électrode selon l'invention

On a procédé à un soudage de tôles XSG 0,7 mm revêtues 10 pm une fréquence de 50 Hz et 10 périodes de soudage avec des électrodes traditionnelles selon une incrémentation par paliers de 9200 A à 10800 A sur 400 points (conditions 1).

Avec des électrodes selon l'invention nous avons procédé à la mesure du point soudé dans les conditions suivantes :
2. Maintien de l'intensité de soudage à 9200 A : le diamètre du point soudé après 500 points de soudure varie entre 2,9 et 5,6 mm ;
3. Incrémentation par paliers de 9200 A à 10000 sur 400 points : le diamètre du point soudé varie entre 4,8 et 5,6 mm ;
4. Incrémentation par palier de 9200 A à 9600 A sur 400 points : le diamètre du point soudé varie entre 5,7 et 6,2 mm.

Dans les conditions 3 il est ainsi possible, lors de l'utilisation des électrodes de l'invention, de doubler le nombre de points soudés, par rapport à une électrode traditionnelle.

Dans les conditions 1 la performance de soudage des électrodes innovantes est la même que celle des électrodes traditionnelles.

### Exemple 3 : Procédé de soudage de tôles - augmentation de l'intensité de soudage avec une électrode selon l'invention

Du fait de ses propriétés électriques différentes, et notamment une meilleure conductibilité électrique de l'électrode et une moindre résistance électrique à l'interface entre la tôle et l'électrode, le domaine de soudabilité des électrodes innovantes se fait avec une intensité de soudage plus élevée.

Le domaine de soudabilité des électrodes selon l'invention, en comparaison à deux électrodes de l'état de la technique, est représenté sur le graphique de la figure 5.

Ainsi, pour une fréquence de 1000 Hz, l'électrode selon l'invention, avec une intensité de soudage de 9200 A, permet 2400 points soudés.

En comparaison, une des électrodes traditionnelles, référencée sous la dénomination « C1 » CuZr, avec une intensité de 8600 A, ne permet que 600 points soudés.

En outre, une autre électrode traditionnelle, référencée « C2 » CuCrZr, permet la soudure de 1400 points avec une intensité de 7900 A.

A noter que le domaine de soudabilité est beaucoup plus large en fonction du temps de soudage (nombre de périodes) pour les électrodes selon l'invention (I (B) et I (H)), ce qui s'explique par la meilleure résistance au fluage qui limite la baisse de densité de courant. Ce domaine plus large confirme la possibilité, avec des électrodes selon l'invention, de réduire l'incrémentation de courants pour un même nombre de points soudés.

## Revendications

1. Electrode de soudage en alliage dont la composition consiste en du cuivre, du chrome, du zirconium et du phosphore et/ou du magnésium, **caractérisée en ce que** la proportion de chrome est comprise entre 0,4 et 0,8% en masse, la proportion de zirconium est comprise entre 0,02 et 0,09% en masse, la proportion totale en phosphore et/ou en magnésium étant supérieure à 0,005% en masse, avec une proportion de magnésium inférieure à 0,1% en masse et une proportion de phosphore inférieure à 0,03 % en masse, le reste de la composition étant du cuivre, la structure de l'électrode comportant des précipités de chrome incohérents dont plus de 90% ont une surface projetée inférieure à 1µm², lesdits précipités de chrome incohérents présentant des dimensions comprises au moins entre 10 et 50 nm, ladite électrode présentant en outre une structure fibrée, visible suivant une coupe transversale de la face active de ladite électrode après surfaçage et attaque chimique, ladite structure étant constituée, d'une part, d'une pluralité de fibres radiales, lesdites fibres présentant une épaisseur inférieure à 1 mm, de préférence inférieure à 0,5 mm, et, d'autre part d'une zone sensiblement centrale sans fibrage ayant un diamètre inférieur à 5 mm, de préférence inférieur à 3 mm et la conductibilité électrique de ladite électrode étant supérieure à 85% IACS, International Annealed Copper Standard.

2. Procédé de fabrication d'une électrode de soudage selon la revendication précédente par coulée continue à partir d'un alliage dont la composition consiste en du chrome dans une proportion comprise entre 0,4 et 0,8% en masse, du zirconium dans une proportion comprise entre 0,02 et 0,09% en masse, du phosphore et/ou du magnésium dans une proportion totale supérieure à 0,005% en masse, la proportion de magnésium étant inférieure à 0,1% en masse et la proportion de phosphore étant inférieure à 0,03 % en masse, le reste de la composition étant du cuivre, ledit procédé comportant au moins les étapes suivantes :
a) fusion des différents composants de l'alliage, à savoir le cuivre, le chrome, le zirconium et du phosphore et/ou du magnésium à une température supérieure à 1200°C, de préférence entre 1200°C et 1300°C ;
b) coulée continue à travers une filière cylindrique présentant un diamètre d permettant d'obtenir une barre d'un diamètre proche du diamètre d de la filière avec le maintien du métal liquide dans le four de coulée à une température comprise entre 1100 et 1300°C;
c) solidification de ladite barre et refroidissement jusqu'à une température inférieure à 100°C, la vitesse de refroidissement étant au moins égale à 10°C/s jusqu'à atteindre une température de la barre de 1060°C, puis au moins égale à 15°C/s entre 1060 et 1040°C, puis au moins égale à 20°C/s entre 1040 et 1030°C, puis au moins égale à 25°C/s entre 1030 et 1000°C, puis au moins égale à 30°C entre 1000 et 900°C, puis au moins égale à 20°C/s pour des températures inférieures à 900°C, jusqu'à ce que la barre soit refroidie à une température au plus de 100°C ;
d) déformation à froid pour obtenir un barreau d'un diamètre inférieur à 20 mm ;
e) traitement de vieillissement ou de revenu à une température comprise entre 450 et 500°C pendant une période de 1 à 2 h, ou à une température de 550°C pendant 10 à 30 mn, ou à une température de 500°C pendant 30 mn à 2 h, ou à une température de 450°C pendant 2 h à 6 h, ou encore à une température de 400°C pendant plus de 20 h ;
f) cisaillage dudit barreau afin d'obtenir des lopins puis poinçonnage ou usinage par enlèvement de matière afin de conférer à ladite électrode sa forme définitive,
dans lequel la structure métallurgique de la face active de ladite électrode comporte des précipités de chrome incohérents dont plus de 90% ont une surface projetée inférieure à 1µm², lesdits précipités de chrome incohérents présentant des dimensions comprises au moins entre 10 et 50 nm, ladite électrode présentant en outre une structure fibrée, visible suivant une coupe transversale de la face active de ladite électrode après surfaçage et attaque chimique, ladite structure étant constituée, d'une part, d'une pluralité de fibres radiales, lesdites fibres présentant une épaisseur inférieure à 1 mm, et, d'autre part, d'une zone sensiblement centrale sans fibrage ayant un diamètre inférieur à 3 mm, et la conductibilité électrique de ladite électrode étant supérieure à 85% IACS (pour International Annealed Copper Standard).

3. Procédé de fabrication d'une électrode de soudage selon la revendication précédente dans lequel la coulée continue de l'étape b) est réalisée avec le maintien d'une température du métal liquide dans le four de coulée comprise entre 1150 et 1250°C.

4. Procédé de fabrication d'une électrode de soudage selon l'une quelconque des revendications 2 ou 3 dans lequel le refroidissement de ladite barre de l'étape c) est effectué à une vitesse de refroidissement au moins égale à 30°C/s pour des températures inférieures à 900°C, jusqu'à ce que la barre soit refroidie à une température au plus de 100°C.

5. Procédé de fabrication d'une électrode de soudage selon l'une quelconque des revendications 2 à 4 dans lequel ledit diamètre d de la filière est compris entre 20 et 70 mm, de préférence entre 20 et 40 mm.

6. Procédé de fabrication d'une électrode de soudage selon l'une quelconque des revendications 2 à 5 dans lequel, au cours de l'étape d) de déformation à froid, une opération d'usinage extérieur, inférieure à 0,5 mm d'épaisseur, est effectuée pour éliminer les défauts de surface générés lors de l'étape c) de solidification.

7. Utilisation d'une électrode selon la revendication 1 dans un procédé de soudage résistif par point d'au moins deux tôles en acier recouvertes d'un revêtement en zinc ou en un alliage comprenant du zinc, ledit revêtement présentant une épaisseur inférieure à 10 pm et lesdites tôles présentant une épaisseur inférieure ou égale à 1,5 mm.

## Patentansprüche

1. Schweißelektrode aus einer Legierung, deren Zusammensetzung aus Kupfer, Chrom, Zirkonium und Phosphor und/oder Magnesium besteht, **dadurch gekennzeichnet, dass** der Anteil an Chrom zwischen 0,4 und 0,8 Gew.-%, der Anteil an Zirkonium zwischen 0,02 und 0,09 Gew.-% liegt, wobei der Gesamtanteil an Phosphor und/oder Magnesium höher als 0,005 Gew.-% ist, mit einem Anteil an Magnesium von weniger als 0,1 Gew.-% und einem Anteil an Phosphor von weniger als 0,03 Gew.-%, wobei der Rest der Zusammensetzung Kupfer ist, wobei die Struktur der Elektrode inkohärente Chrompräzipitate umfasst, von denen mehr als 90% eine projizierte Oberfläche von weniger als 1µm² haben, wobei die besagten inkohärenten Chrompräzipitate Abmessungen aufweisen, die mindestens zwischen 10 und 50 nm liegen, wobei die besagte Elektrode außerdem eine faserige Struktur aufweist, die nach dem Oberflächenbehandlung und Ätzen in einem Querschnitt der aktiven Fläche der besagten Elektrode sichtbar ist, wobei die besagte Struktur einerseits aus einer Vielzahl von radialen Fasern, wobei die besagten Fasern eine Dicke von weniger als 1 mm, vorzugsweise weniger als 0,5 mm, aufweisen, und andererseits einer im wesentlichen zentralen Zone ohne Fasern, die einen Durchmesser von weniger als 5 mm, vorzugsweise weniger als 3 mm, hat, besteht, und die elektrische Leitfähigkeit der besagten Elektrode höher als 85% IACS, International Annealed Copper Standard, ist.

2. Verfahren zur Herstellung einer Schweißelektrode nach dem vorhergehenden Anspruch durch Stranggießen ab einer Legierung, deren Zusammensetzung aus Chrom in einem Anteil zwischen 0,4 und 0,8 Gew.-%, Zirkonium in einem Anteil zwischen 0,02 und 0,09 Gew.-%, Phosphor und/oder Magnesium in einem Gesamtanteil von mehr als 0,005 Gew.-% besteht, wobei der Anteil an Magnesium weniger als 0,1 Gew.-% und der Anteil an Phosphor weniger als 0,03 Gew.-% beträgt, wobei der Rest der Zusammensetzung Kupfer ist, wobei das Verfahren mindestens die folgenden Stufen umfasst:
a) Schmelzen der verschiedenen Bestandteile der Legierung, d.h. des Kupfers, des Chroms, des Zirkoniums und des Phosphors und/oder des Magnesiums, bei einer Temperatur höher als 1200°C, vorzugsweise zwischen 1200°C und 1300°C;
b) kontinuierliches Stranggießen durch eine zylindrische Düse, die einen Durchmesser d hat, der es ermöglicht, einen Stab mit einem Durchmesser nahe an dem Durchmesser d der Düse zu erhalten, wobei das flüssige Metall in dem Gussofen bei einer Temperatur zwischen 1100 und 1300°C gehalten wird;
c) Erstarren des besagten Stabs und Abkühlen bis auf eine Temperatur von weniger als 100°C, wobei die Abkühlgeschwindigkeit mindestens gleich 10°C/s ist, bis zum Erreichen einer Temperatur des Stabs von 1060°C, dann mindestens gleich 15°C/s zwischen 1060 und 1040°C, dann mindestens gleich 20°C/s zwischen 1040 und 1030°C, dann mindestens gleich 25°C/s zwischen 1030 und 1000°C, dann mindestens gleich 30°C zwischen 1000 und 900°C, dann mindestens 20°C/s bei Temperaturen von weniger als 900°C ist, bis der Stab auf eine Temperatur von höchstens 100°C abgekühlt ist;
d) Kaltverformen, um einen Stab mit einem Durchmesser von weniger als 20 mm zu erhalten;
e) Alterungs- oder Aufbereitungsbehandlung bei einer Temperatur zwischen 450 und 500°C während einem Zeitraum von 1 bis 2 Stunden, oder bei einer Temperatur von 550°C während 10 bis 30 Minuten, oder bei einer Temperatur von 500°C während 30 Minuten bis 2 Stunden, oder bei einer Temperatur von 450°C während 2 Stunden bis 6 Stunden, oder auch bei einer Temperatur von 400°C während mehr als 20 Stunden;
f) Schneiden des Stabs, um Rohlingen zu erhalten, danach Stanzen oder Bearbeiten durch Entfernen von Material, um der besagten Elektrode ihre endgültige Form zu verleihen,
wobei die metallurgische Struktur der aktiven Fläche der besagten Elektrode inkohärente Chrompräzipitate umfasst, von denen mehr als 90% eine projizierte Oberfläche von weniger als 1µm² haben, wobei die besagten inkohärenten Chrompräzipitate Abmessungen aufweisen, die mindestens zwischen 10 und 50 nm liegen, wobei die besagte Elektrode außerdem eine faserige Struktur aufweist, die nach dem Oberflächenbehandlung und Ätzen in einem Querschnitt der aktiven Fläche der besagten Elektrode sichtbar ist, wobei die besagte Struktur einerseits aus einer Vielzahl von radialen Fasern, wobei die besagten Fasern eine Dicke von weniger als 1 mm aufweisen, und andererseits einer im wesentlichen zentralen Zone ohne Fasem, die einen Durchmesser von weniger als 3 mm hat, besteht, und die elektrische Leitfähigkeit der besagten Elektrode höher als 85% IACS (für International Annealed Copper Standard) ist.

3. Verfahren zur Herstellung einer Schweißelektrode nach dem vorhergehenden Anspruch, wobei das Stranggießen im Schritt b) unter Aufrechterhaltung einer Temperatur des flüssigen Metalls im Gießofen zwischen 1150 und 1250°C durchgeführt wird.

4. Verfahren zur Herstellung einer Schweißelektrode nach irgendeinem der Ansprüche 2 oder 3, wobei das Abkühlen des besagten Stabs im Schritt c) bei einer Abkühlgeschwindigkeit mindestens gleich 30°C/s für Temperaturen unter 900°C durchgeführt wird, bis der Stab auf eine Temperatur von höchstens 100°C abgekühlt ist.

5. Verfahren zur Herstellung einer Schweißelektrode nach irgendeinem der Ansprüche 2 bis 4, wobei der Durchmesser d der Düse zwischen 20 und 70 mm, vorzugsweise zwischen 20 und 40 mm, liegt.

6. Verfahren zur Herstellung einer Schweißelektrode nach irgendeinem der Ansprüche 2 bis 5, wobei während des Schritts d) der Kaltverformung ein äußerer Bearbeitungsvorgang, von weniger als 0,5 mm in Dicke, durchgeführt wird, um die Oberflächendefekte, die während des Schritts c) der Erstarrung erzeugt werden, zu beseitigen.

7. Verwendung einer Elektrode nach Anspruch 1 in einem Verfahren zum Widerstands-Punktschweißen von mindestens zwei mit einem Zinküberzug oder einer Zink enthaltenden Legierung überzogenen Stahlblechen, wobei der besagte Überzug eine Dicke von weniger als 10µm aufweist und die besagten Bleche eine Dicke von weniger als oder gleich 1,5 mm aufweisen.

## Claims

1. A welding electrode made of an alloy the composition of which consists of copper, chromium, zirconium and phosphorus and/or magnesium, wherein the proportion of chromium varies between 0.4 and 0.8 wt.%, the proportion of zirconium varies between 0.02 and 0.09 wt.%, the total proportion of phosphorus and/or magnesium being higher than 0.005 wt.%, with a proportion of magnesium of less than 0.1 wt.% and a proportion of phosphorus of less than 0.03 wt.%, the rest of the composition being copper, the structure of the electrode including incoherent chromium precipitates, more than 90% of which have a projected surface of less than 1µm², said incoherent chromium precipitates having dimensions varying between at least 10 and 50 nm, said electrode having in addition a fiber structure, visible in a cross-sectional view of the active face of said electrode after surfacing and etching, said structure being formed, on the one hand, of a plurality of radial fibers, said fibers having a thickness of less than 1 mm, preferably less than 0.5 mm, and on the other hand, of a substantially central zone without fibers, having a diameter of less than 5 mm, preferably less than 3 mm, and the electrical conductivity of said electrode being higher than 85% IACS, International Annealed Copper Standard.

2. A method for manufacturing a welding electrode according to the preceding claim by continuous casting starting from an alloy, the composition of which consists of chromium in a proportion varying between 0.4 and 0.8 wt.%, of zirconium in a proportion varying between 0.02 and 0.09 wt.%, of phosphorus and/or magnesium in a total proportion of more than 0.005 wt.%, the proportion of magnesium being lower than 0.1 wt.% and the proportion of phosphorus being lower than 0.03 wt.%, the rest of the composition being copper, said method including at least the following steps:
a) melting the various components of the alloy, i.e. copper, chromium, zirconium and phosphorus and/or magnesium at a temperature higher than 1200°C, preferably between 1200°C and 1300°C;
b) continuous casting through a cylindrical die having a diameter d permitting to obtain a bar having a diameter close to the diameter d of the die with maintaining the liquid metal in the casting furnace at a temperature between 1100 and 1300°C;
c) solidifying said bar and cooling to a temperature lower than 100°C, the cooling rate being at least equal to 10°C/s until reaching a bar temperature of 1060°C, then at least equal to 15°C/s between 1060 and 1040°C, then at least equal to 20°C/s between 1040 and 1030°C, then at least equal to 25°C/s between 1030 and 1000°C, then at least equal to 30°C between 1000 and 900°C, then at least equal to 20°C/s for temperatures lower than 900°C, until the bar is cooled to a temperature of not more than 100°C;
d) cold deforming, in order to obtain a bar with a diameter of less than 20 mm;
e) aging or tempering treatment at a temperature between 450 and 500°C for a period of 1 to 2 hours, or at a temperature of 550°C for 10 to 30 minutes, or at a temperature of 500°C for 30 minutes to 2 hours, or at a temperature of 450°C for 2 hours to 6 hours, or also at a temperature of 400°C for more than 20 hours;
f) shearing said rod in order to obtain plots, then punching or machining by removal of material in order to provide said electrode with its final shape,
wherein the metallurgical structure of the active face of said electrode includes incoherent chromium precipitates, more than 90% of which have a projected surface of less than 1µm², said incoherent chromium precipitates having dimensions varying between at least 10 and 50 nm, said electrode having in addition a fiber structure, visible in a cross-section view of the active face of said electrode after surfacing and etching, said structure being formed, on the one hand, of a plurality of radial fibers, said fibers having a thickness of less than 1 mm, and on the other hand, a substantially central zone without fibers, having a diameter of less than 3 mm, and the electrical conductivity of said electrode being higher than 85% IACS (for International Annealed Copper Standard).

3. The method for manufacturing a welding electrode according to the preceding claim, wherein the continuous casting of step b) is performed with maintaining a temperature of the liquid metal in the casting furnace varying between 1150 and 1250°C.

4. The method for manufacturing a welding electrode according to any one of claims 2 or 3, wherein the cooling of said bar of step c) is performed at a cooling rate at least equal to 30°C/s for temperatures lower than 900°C, until the bar is cooled to a temperature of not more than 100°C.

5. The method for manufacturing a welding electrode according to any one of claims 2 to 4, wherein said diameter d of the die varies between 20 and 70 mm, preferably between 20 and 40 mm.

6. The method for manufacturing a welding electrode according to any one of claims 2 to 5, wherein, during step d) of cold deformation, an external machining operation, of less than 0.5 mm in thickness, is performed in order to eliminate the surface defects generated during the step c) of solidification.

7. Use of an electrode according to claim 1 in a method for resistance spot welding of at least two steel sheets coated with a coating of zinc or an alloy comprising zinc, said coating having a thickness of less than 10µm and said sheets having a thickness of less than or equal to 1.5 mm.
